# EUROPEAN PATENT APPLICATION

(11) **EP 3 817 081 A1**
(43) Date of publication of application: **05.05.2021**
(21) Application number: 19825856.8
(22) Date of filing: 25.06.2019
(51) Int. Cl.: H01M 2/02, B32B 15/09, H01G 11/80, H01M 2/30

(54) **OUTER PACKAGING MATERIAL FOR ELECTRICITY STORAGE DEVICES AND ELECTRICITY STORAGE DEVICE USING SAME**

(30) Priority: 27.06.2018 JP 2018121795
(71) Applicant: Toppan Printing Co., Ltd., Tokyo 110-0016 (JP)
(72) Inventor: SASAKI Satoshi, Tokyo 110-0016 (JP); MURAKI Takuya, Tokyo 110-0016 (JP); OONO Naoto, Tokyo 110-0016 (JP)
(74) Representative: Hoffmann Eitle
(86) International application number: PCT/JP2019/025223
(87) International publication number: WO 2020/004413

(57) **Abstract**

A packaging material for a power storage device according to an aspect of the present disclosure has a laminate structure in the following order including a substrate layer, a first adhesive layer, a metal foil layer, a second adhesive layer, and an inner layer containing a polyester-based resin. The inner layer has a melting peak temperature during melting in a range of 160 to 280°C which is measured by a differential scanning calorimeter. The substrate layer has a melting peak temperature that is higher than the melting peak temperature of the inner layer.

## Description

### [Technical Field]

The present invention relates to a power storage device packaging material and a power storage device using the packaging material.

### [Background Art]

As power storage devices, there are known, for example, secondary batteries, such as lithium ion batteries, nickel hydride batteries, and lead batteries, and electrochemical capacitors, such as electric double layer capacitors. Due to miniaturization of mobile devices, limitation of installation spaces, or other reasons, further miniaturization of power storage devices is sought, and thus attention is being given to lithium ion batteries having high energy density. The conventional packaging materials for lithium ion batteries have been metal cans. However, multilayer films have been increasingly used due to their light weight, high heat dissipation, and low production cost.

Lithium ion batteries having packaging materials formed of such multilayer films are referred to as laminated lithium ion batteries. The packaging material covers the battery contents (such as the positive electrode, separator, negative electrode, and electrolyte solution) to prevent water from entering inside. A known example of a laminated lithium ion battery is produced by forming a recess to accommodate the battery contents in a portion of the packaging material by a method of cold forming, folding the remaining part of the packaging material, and sealing the edge portions by heat sealing (see, for example, PTL 1).

### [Citation List]

### [Patent Literature]

[PTL 1] JP 2013-101765 A

### [Summary of the Invention]

### [Technical Problem]

As a next-generation lithium ion battery, research and development of a power storage device called an all-solid-state battery is being performed. An all-solid-state battery is characterized in that it uses a solid electrolyte instead of an organic electrolyte solution as the electrolyte. A lithium ion battery cannot be used at a temperature higher than the boiling temperature of the electrolyte solution (about 80°C). On the other hand, an all-solid-state battery can be used at a temperature higher than 100°C, and further the lithium-ion conductivity can be improved by operating the all-solid-state battery at a high temperature (for example, 100 to 150°C).

However, when a laminated all-solid-state battery is produced using a laminate as described above as its packaging material, the sealing performance of the package of the all-solid-state battery may be insufficient due to insufficient heat-resistance of the packaging material. In addition, through attempts to improve the heat resistance of the packaging material, the inventors found out that the appearance of the power storage device (especially its heat seal part) may deteriorate depending on the combination of the substrate layer (the outer layer) and the inner layer (the layer having heat sealability) of the laminated packaging material.

The present disclosure has been made in view of the above problems, and provides a packaging material that has excellent heat resistance and is useful for manufacturing a power storage device having a good appearance, and a power storage device using the same.

### [Solution to Problem]

An aspect of the present disclosure provides a packaging material for a power storage device. The packaging material has a laminate structure including a substrate layer, a first adhesive layer, a metal foil layer, a second adhesive layer, and an inner layer containing a polyester-based resin in this order, characterized in that the inner layer has a melting peak temperature in a range of 160 to 280°C as measured by a differential scanning calorimeter (DSC) during melting, and the substrate layer has a melting peak temperature that is higher than the melting peak temperature of the inner layer. Specific examples of the polyester-based resin include polyethylene terephthalate (PET) and a copolymer thereof, and a polyester-based resin based on a PET component.

The sealant layer (inner layer) of a conventional packaging material for a power storage device is mainly formed of polypropylene-based resin and has a melting point of about 130 to 150°C. Therefore, its heat resistance is insufficient to be used for an all-solid-state battery which may reach a temperature of 100 to 150°C. In contrast, the packaging material according to the present disclosure employs an inner layer containing a polyester-based resin and having a melting peak temperature in the range of 160 to 280°C, and therefore, in terms of heat resistance, it can be applied to a power storage device that may reach the above-described temperature. In addition, since the substrate layer has a melting peak temperature higher than that of the inner layer, it is possible to prevent the appearance of the power storage device from being deteriorated due to the melting of the substrate layer (outer layer) during heat sealing. The "melting peak temperature" as used herein may be determined based on the method specified in JIS K 7121-1987, and when two or more melting peaks appear independently, the lowest melting peak temperature is adopted.

An example of a power storage device to which the packaging material according to the present disclosure may be applied is an all-solid-state battery. However, it is not limited to this, and the packaging material may be applied to other power storage devices (for example, lithium-ion secondary batteries).

The inner layer of the packaging material according to the present disclosure may have a single-layer structure or a multi-layer structure. When the inner layer has a single-layer structure, the inner layer may be, for example, a crystalline PET film (melting peak temperature: about 255°C). Alternatively, it may be a PET film that is partially amorphous so that the melting peak temperature is lowered to, for example, a range of 160 to 250°C, or a copolymer film thereof. A film having a reduced melting peak temperature may be a film of a polyester-based resin containing PET as the base component. Such a polyester-based resin has a structural unit derived from ethylene glycol and a structural unit derived from terephthalic acid, and other structural units. Examples of the dihydric alcohol component from which the structural units of the polyester-based resin are derived include neopentyl glycol, 1,4-butadiol, and diethylene glycol. Examples of the acid component from which the structural units of the polyester-based resin are derived include isophthalic acid, adipic acid, and sebacic acid. The melting point of the polyester-based resin can be adjusted by controlling the amount of these structural units. Such a polyester-based resin based on a PET copolymer and a PET component will be hereinafter referred to as a PET-based resin.

When the inner layer has a multi-layer structure, the inner layer may include a first layer containing a polyester-based resin and having a melting peak temperature of 170 to 280°C, and a second layer formed on an inner surface of the first layer and containing a polyester-based resin, and the second layer may have a melting peak temperature in a range of 160 to 270°C and lower than the melting peak temperature of the first layer. Adopting a second layer that melts more easily than the first layer has the effect of achieving a further improved sealing strength. To realize further improved sealing strength and heat resistance, the second layer may be a layer containing a thermosetting resin.

If the inner layer has a multi-layer structure including the first layer and the second layer, a third layer may be formed on the surface of the first layer. In this case, the second layer and the third layer are on opposite sides of the first layer. The third layer may contain a polyester-based resin and may have a melting peak temperature in a range of 160 to 270°C and lower than that of the first layer. Adopting a third layer that melts more easily than the first layer has the effect of achieving a further improved sealing strength. To realize further improved sealing strength and heat resistance, the third layer may be a layer containing a thermosetting resin.

An aspect of the present disclosure provides a power storage device (for example, an all-solid-state battery) comprising: a power storage device body; a current drawing terminal extending from the power storage device body; and the above-described packaging material arranged to clamp the current drawing terminal and house the power storage device body.

### [Effect of the Invention]

According to the present disclosure, a packaging material which is useful for producing a power storage device excellent in appearance and excellent in heat resistance is provided. Moreover, a power storage device employing the power storage device is provided.

### [Brief Description of the Drawings]

Fig. 1 is a perspective view showing an all-solid-state battery that is an embodiment of a power storage device according to the present disclosure.
Fig. 2 is a schematic cross-sectional view illustrating an embodiment of a packaging material.
Figs. 3(a) to (c) are cross-sectional views schematically illustrating the configuration of the inner layer.
Fig. 4 is a cross-sectional view taken along the line IV-IV shown in Fig. 1, and schematically illustrates the configuration of a tab (terminal resin films and a metal terminal) of the all-solid-state battery.
Figs. 5(a) to (c) are cross-sectional views schematically illustrating the configuration of the terminal resin films.

### [Description of the Embodiments]

With reference to the drawings, some embodiments of the present disclosure will be described in detail. Throughout the drawings, the same or corresponding components are denoted by the same reference signs, and duplicated description is omitted. Moreover, dimensional ratios of the drawings are not limited to the ratios shown in the drawings.

### <Power Storage Device>

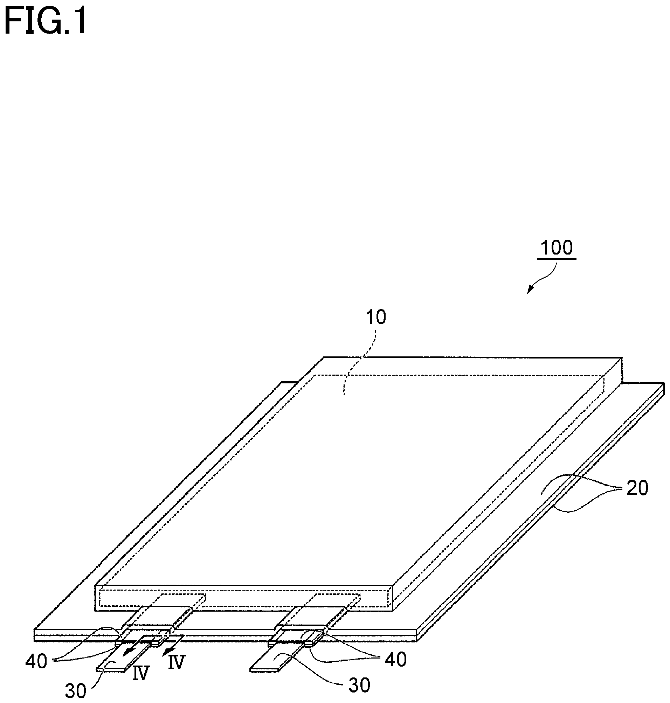

Fig. 1 is a perspective view illustrating a schematic configuration of a power storage device according to the present embodiment. In Fig. 1, an all-solid-state battery is illustrated as an example of a power storage device 100. The following description is provided by way of this example. The power storage device configured as shown in Fig. 1 may also be referred to as a battery pack or a battery cell.

The power storage device 100 is an all-solid-state battery including a power storage device body 10, a packaging material 20, a pair of metal terminals 30 (current drawing terminals), and terminal resin films (tab sealants) 40. The power storage device body 10 is a battery body that performs charge and discharge. The packaging material 20 is arranged so as to cover the surfaces of the power storage device body 10 and partially contact with the terminal resin films 40.

### (Packaging Material)

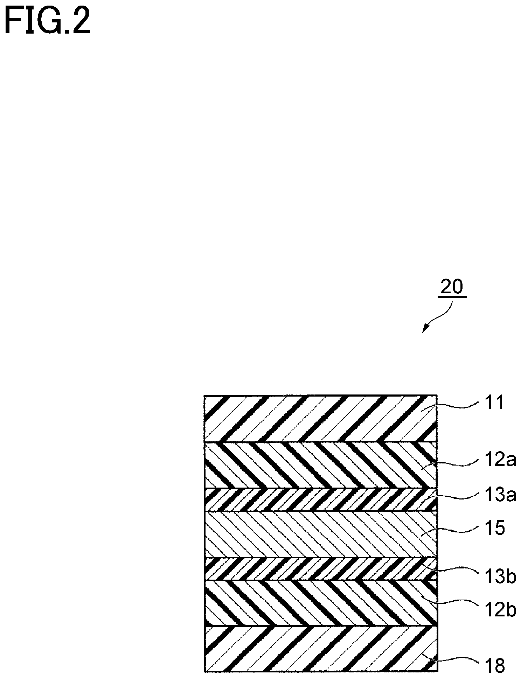

Fig. 2 is a cross-sectional view illustrating an example of a cross section of the packaging material 20. The packaging material 20 has a multilayer structure in which a substrate layer 11, a first adhesive layer 12a, a first anti-corrosion treatment layer 13a, a barrier layer (metal foil layer) 15, a second anti-corrosion treatment layer 13b, a second adhesive layer 12b, and an inner layer 18 are laminated in this order from the outer side to the inner side (the inner side is the side of the power storage device body 10). The inner layer 18 contains polyethylene terephthalate (PET) or a copolymer thereof and has a melting peak temperature in the range of 160 to 280°C. The melting peak temperature of the substrate layer 11 is higher than that of the inner layer 18.

Since the inner layer 18 contains PET or a copolymer thereof and has a melting peak temperature in the range of 160 to 280°C, the packaging material 20 achieves the heat resistance required for a packaging material of the power storage device 100 (all-solid-state battery) used at a temperature of, for example, 100 to 150°C. In addition, since the substrate layer 11 has a melting peak temperature higher than that of the inner layer 18, it is possible to prevent the appearance of the packaging material 20 from being deteriorated due to the melting of the substrate layer 11 (outer layer) during heat sealing. In the following, first, the inner layer 18 and the substrate layer 11 will be described.

A commercially available crystalline PET film (melting peak temperature: about 255°C) can be used as the inner layer 18. The melting peak temperature for the inner layer 18 may be determined within the above range depending on the heat resistance required for the inner layer 18 (for example, the operating temperature of the power storage device 100). Furthermore, for example, the crystallinity of the crystalline PET film may be adjusted; the crystalline PET film may be non-stretched; a copolymer containing unit of polyethylene terephthalate and units of another resin may be formed; or a PET film containing crystalline PET and amorphous PET may be used. Alternatively, a polyester-based resin containing a PET component as the base component may be used as the material for the inner layer 18. Such a polyester-based resin has a structural unit derived from ethylene glycol and a structural unit derived from terephthalic acid, and other structural units. Examples of the dihydric alcohol component from which the structural units of the polyester-based resin are derived include neopentyl glycol, 1,4-butadiol, and diethylene glycol. Examples of the acid component from which the structural units of the polyester-based resin are derived include isophthalic acid, adipic acid, and sebacic acid. The melting point of the polyester-based resin can be adjusted by controlling the amount of these structural units. Such a polyester-based resin based on a PET copolymer and a PET component will be hereinafter referred to as a PET-based resin.

As described above, the melting peak temperature of the inner layer 18 is in the range of 160 to 280°C. If this temperature is lower than 160°C, the heat resistance of the inner layer 18 would be insufficient, and if it exceeds 280°C, the temperature required for heat sealing becomes excessively high. The lower limit of the melting peak temperature of the inner layer 18 may be any one of 175°C, 185°C, 195°C, 200°C, 215°C, 215°C, 225°C or 235°C. The upper limit of the melting peak temperature of the inner layer 18 may be any one of 275°C, 268°C, 262°C, or 252°C.

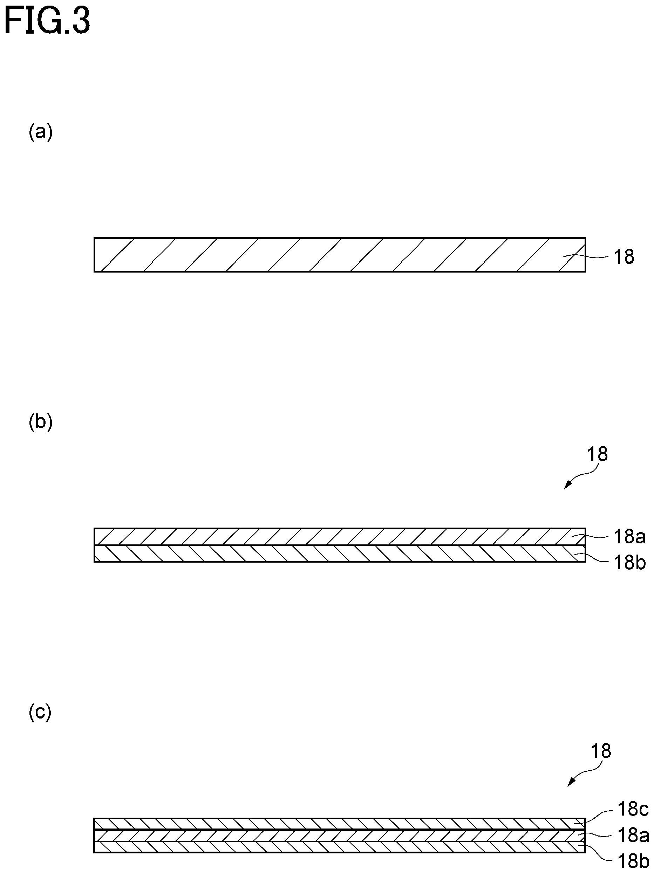

The inner layer 18 may have a single-layer structure or a multi-layer structure. As shown in Fig. 3(a), if the inner layer 18 has a single-layer structure, the inner layer 18 may be, for example, a crystalline PET film (melting peak temperature: about 255°C). Furthermore, the crystallinity of the crystalline PET film may be adjusted, the crystalline PET film may be non-stretched, or a PET film may be used to lower the melting peak temperature to, for example, a range of 160 to 250°C. If a PET film having a reduced melting peak temperature is used as the inner layer 18, a crystalline PET film (melting peak temperature: about 255°C) can be used as the substrate layer 11.

If the inner layer 18 has a single-layer structure, the inner layer 18 preferably has a thickness in the range of 10 to 100 µm, and more preferably 20 to 80 µm. If the inner layer 18 has a thickness of 10 µm or more, the sealing properties and insulating properties are likely to be secured. If the thickness thereof is 100 µm or less, cost reduction can be realized.

As shown in Fig. 3(b), the inner layer 18 may have a two-layer structure including a first layer 18a, and a second layer 18b formed on the inner surface of the first layer 18a. Preferably, the first layer 18a contains PET and/or a PET-based resin and has a melting peak temperature of 170 to 280°C. Preferably, the second layer 18b contains PET and/or a PET-based resin and has a melting peak temperature that is lower than that of the first layer 18a. The melting peak temperature of the second layer 18b may be, for example, in the range of 160 to 270°C. Between the melting peak temperature T_{A} of the first layer 18a and the melting peak temperature T_{B} of the second layer 18b, there is a difference (T_{A} - T_{B}), which is preferably 10°C or more, and more preferably 20 to 100°C. If this temperature difference is 10°C or more, an even stronger sealing can be obtained.

The first layer 18a preferably has a thickness in the range of 5 to 500 µm, and more preferably 20 to 200 µm. If the first layer 18a has a thickness of 5 µm or more, the insulating properties are easily secured. If the thickness thereof 500 µm or less, cost reduction can be realized.

In view of heat resistance and seal strength, the second layer 18b may contain a thermosetting resin instead of a PET or PET-based resin, or may contain both of a PET or PET-based resin and a thermosetting resin. Examples of such a thermosetting resin include polyimide resin, phenol resin, urea resin, melamine resin, unsaturated polyester resin, urethane resin, allyl resin, epoxy resin, furan resin, and silicone resin. These resins may be used singly or in combination of two or more.

The second layer 18b preferably has a thickness in the range of 5 to 500 µm, and more preferably 20 to 200 µm. If the second layer 18b has a thickness of 5 µm or more, the sealing properties are likely to be secured. If the thickness thereof is 500 µm or less, cost reduction can be realized.

As shown in Fig. 3(c), the inner layer 18 may have a three-layer structure including the first layer 18a, the second layer 18b, and a third layer 18c. In this case, the second layer 18b and the third layer 18c are on opposite side surfaces of the first layer 18a. Preferably, the third layer 18c contains PET and/or PET-based resin and has a melting peak temperature that is lower than that of the first layer 18a. The melting peak temperature of the third layer 18c may be, for example, in the range of 160 to 270°C. Between the melting peak temperature T_{A} of the first layer 18a and the melting peak temperature T_{C} of the third layer 18c, there is a difference (T_{A} - T_{C}) which is preferably 10°C or more, and more preferably 20 to 100°C. If this temperature difference is 10°C or more, an even stronger sealing can be obtained.

In view of heat resistance and seal strength, the third layer 18c may contain a thermosetting resin instead of a PET or PET-based resin, or may contain both of a PET or PET-based resin and a thermosetting resin. Examples of such a thermosetting resin include polyimide resin, phenol resin, urea resin, melamine resin, unsaturated polyester resin, urethane resin, allyl resin, epoxy resin, furan resin, and silicone resin. These resins may be used singly or in combination of two or more.

The third layer 18c preferably has a thickness in the range of 5 to 500 µm, and more preferably 20 to 200 µm. If the third layer 18c has a thickness of 5 µm or more, a high seal strength is likely to be secured. If the thickness thereof is 500 µm or less, cost reduction can be realized. The second layer 18b and the third layer 18c may either have the same configuration or have different configurations. The inner layer 18 may contain, for example, various additives (e.g., flame retardants, slip agents, anti-blocking agents, antioxidants, light stabilizers, tackifiers, and the like).

As described above, the melting peak temperature of the substrate layer 11 is higher than that of the inner layer 18. If the inner layer 18 has a multi-layer structure, the melting peak temperature of the inner layer 18 refers to the melting peak temperature of a layer having the highest melting peak temperature (for example, the first layer 18a). The melting peak temperature of the substrate layer 11 is preferably 290°C or more, and more preferably in the range of 290 to 350°C. Examples of resin films that can be used as the substrate layer 11 and that have a melting peak temperature in the above range include nylon film, PET film, polyamide film, and polyphenylene sulfide film (PPS film). A commercially available film may be used as the substrate layer 11. Alternatively, the substrate layer 11 may be formed by coating (applying a coating liquid and drying the liquid). The substrate layer 11 may have a single-layer structure or a multi-layer structure, and may be formed by applying a thermosetting resin. Further, the substrate layer 11 may contain, for example, various additives (e.g., flame retardants, slip agents, anti-blocking agents, antioxidants, light stabilizers, tackifiers, and the like).

Between the melting peak temperature T₁₁ of the substrate layer 11 and the melting peak temperature T₁₈ of the inner layer 18, there is a difference (T₁₁ - T₁₈) which is preferably 20°C or more, and more preferably 40 to 100°C. If this temperature difference is 20°C or more, it is possible to further prevent the deterioration of the appearance of the packaging material 20 due to heat sealing. The substrate layer 11 preferably has a thickness in the range of 5 to 50 µm, and more preferably 12 to 30 µm.

The first adhesive layer 12a, the first anti-corrosion treatment layer 13a, the barrier layer (metal foil layer) 15, the second anti-corrosion treatment layer 13b, and the second adhesive layer 12b will be described. The heat resistance of these layers is similar to or higher than those of the inner layer 18 and the substrate layer 11.

The adhesive layers 12a and 12b are required to have sufficient heat resistance, and a known adhesive such as a generally used adhesive for dry lamination, an acid-modified thermally adhesive resin, a thermosetting adhesive, or the like can be appropriately selected and used. Examples of thermosetting adhesives include polyester urethane adhesives and epoxy adhesives. In view of heat resistance, the adhesive layers 12a and 12b may be both preferably formed of a cured product of a thermosetting adhesive.

The barrier layer 15 is a metal layer having electrical conductivity. Examples of the material for the barrier layer 15 include aluminum, stainless steel, and the like. However, from the viewpoint of cost, weight (density), or the like aluminum is preferable. The anti-corrosion treatment layers 13a and 13b protect the barrier layer 15. As an example of the anti-corrosion treatment layers 13a and 13b, a layer containing a rare earth element oxide (for example, cerium oxide), and phosphoric acid or phosphate may be mentioned. As shown in Fig. 2, the anti-corrosion treatment layers 13a and 13b may preferably be formed to sandwich the barrier layer 15 from the viewpoint of performance. However, taking account of cost, only the anti-corrosion treatment layer 13b may be provided.

### (Metal Terminals)

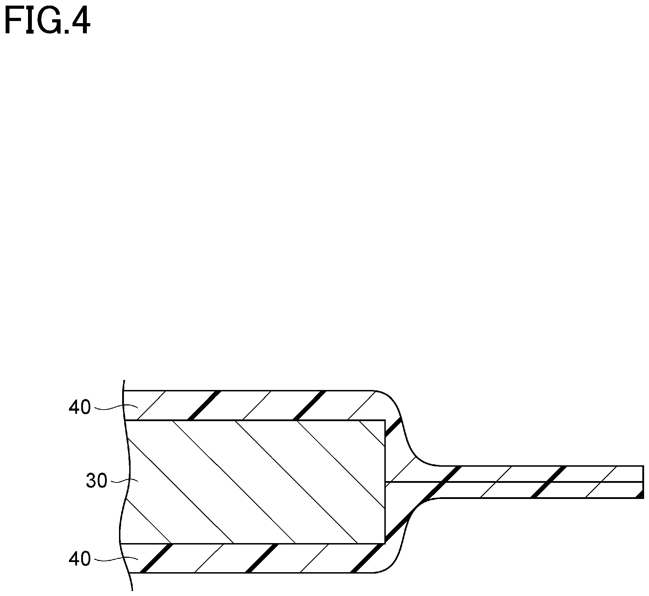

Fig. 4 is a cross-sectional view taken along the line IV-IV of Fig. 1, illustrating the terminal resin films and the metal terminals. One of the pair of (two in the case of Fig. 1) metal terminals 30 is electrically connected to a positive electrode of the power storage device body 10, and the other is electrically connected to a negative electrode of the power storage device body 10. The pair of metal terminals 30 extends to the outside of the packaging material 20 from the power storage device body 10. The pair of metal terminals 30 may each be in a plate-like shape, for example.

A metallic material may be used as the material for the metal terminals 30. The metal material of the metal terminals 30 can be determined taking account of, for example, the structure of the power storage device body 10, the materials of the components of the power storage device body 10, and the like. For example, if the power storage device 100 is an all-solid-state battery, aluminum is preferably used as a material for the metal terminal 30 which is connected to the positive electrode of the power storage device body 10. As a material used for the metal terminal 30 connected to the negative terminal of the power storage device body 10, it is preferable to use copper the surface of which is provided with a nickel-plated layer. Alternatively, it is preferable to use nickel.

The metal terminal 30 has a thickness which depends on the size or capacity of the all-solid-state battery. If the all-solid-state battery is of a small size, the thickness of the metal terminals 30 are preferably 50 µm or more, for example. If the all-solid-state battery is of a large size so as to be applicable such as to power storage and vehicle installation, the thickness of the metal terminals 30 can be appropriately set to within the range of 100 to 500 µm, for example.

### (Terminal Resin Film)

As shown in Fig. 4, each terminal resin film 40 is arranged so as to cover a part of the outer peripheral surface of the metal terminals 30. The sealing property and the insulating property of the power storage device 100 can be further improved by providing the terminal resin film 40 between each metal terminal 30 and the packaging material 20. The heat resistance of the terminal resin film 40 is similar to or higher than those of the inner layer 18 and the substrate layer 11. If the inner layer 18 of the packaging material 20 provides sufficient sealing and insulation for the power storage device 100, the terminal resin films 40 may not necessarily be used.

The terminal resin film 40 is made of a resin composition that adheres to the metal terminals 30. The resin composition contains at least one of a thermosetting resin, and a thermoplastic resin having a melting peak temperature of 160°C or higher. Moreover, the terminal resin film 40 may preferably not include a thermoplastic resin having a melting peak temperature below 160°C. According to a terminal resin film 40 having such a configuration, the sealing property of the power storage device 100 can be sufficiently maintained even if the power storage device is used under a temperature of, for example, 100 to 150°C, or the temperature of the metal terminals 30 reaches, for example, 100 to 150°C. The resin composition contains at least one of a thermosetting resin, and a thermoplastic resin having a melting peak temperature of 200°C or higher. Moreover, the resin composition may not include a thermoplastic resin having a melting peak temperature of less than 200°C.

The thermosetting resin used for the terminal resin film 40 may be at least one selected from the group consisting of polyimide resin, phenol resin, urea resin, melamine resin, unsaturated polyester resin, urethane resin, allyl resin, epoxy resin, furan resin, and silicone resin. These thermosetting resins have good adhesivity to the metallic materials (for example, aluminum and nickel) composing the surface of the metal terminals 30, and also have good heat resistance.

The thermoplastic resin used for the terminal resin film 40 may be at least one selected from the group consisting of PET, PET-based resin as described above, nylon, polyvinyl alcohol resin, polyvinylidene chloride, polyamide resin, polybutylene terephthalate resin, polyphenylene sulfide, polyetherimide, polysulfone, fluororesin, polyamide-imide, and acetyl cellulose. These thermoplastic resins have good adhesivity to the metallic materials (for example, aluminum and nickel) composing the surface of the metal terminals 30, and also have good heat resistance.

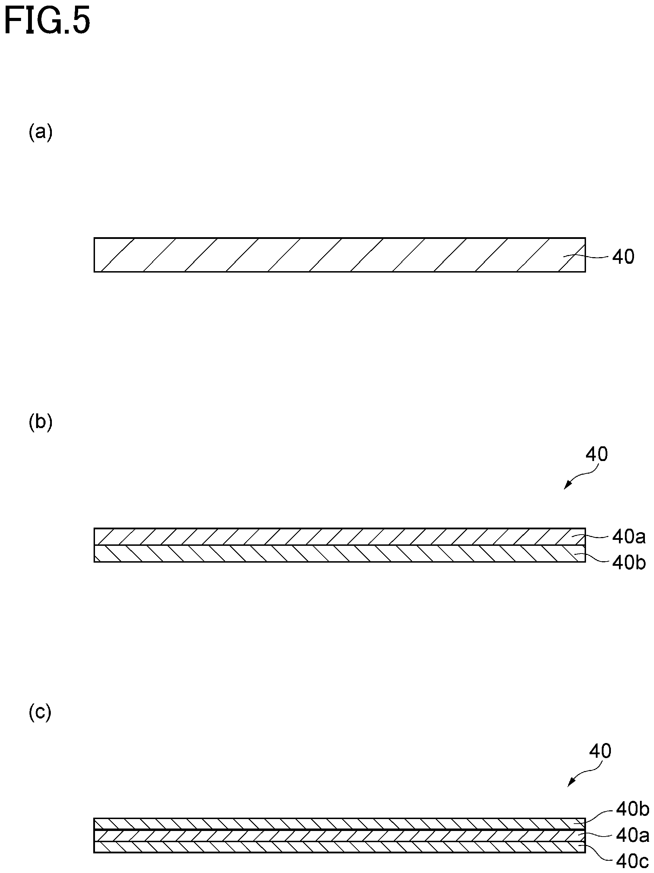

The terminal resin film 40 may have a single-layer structure or a multi-layer structure. If the terminal resin film 40 has a single layer structure (see Fig. 5(a)), the resin composition composing the terminal resin films 40 is preferably one kind of thermoplastic resin selected from the group consisting of PET, polyphenylene sulfide, urethane resin, and epoxy resin and/or one kind of thermosetting resin selected from the group consisting of urethane resin and epoxy resin. By using a film composed of such resin(s) as the terminal resin film 40, the terminal resin film 40 achieves both the adhesion to the metal terminal 30 (the resin composition has some fluidity during heat sealing) and the insulation of the metal terminal 30 (the fluidity of the resin composition during heat sealing is limited) compatibly.

If the terminal resin film 40 has a multi-layer structure, the terminal resin film 40 may have a structure including a first layer 40a containing PET and/or PET-based resin having a melting peak temperature of 160 to 270°C or polyphenylene sulfide (PPS) having a melting peak temperature of 260 to 300°C, and a second layer 40b formed on the surface of the first layer 40a facing to the metal terminals 30 containing a thermosetting resin or a thermoplastic resin having a melting peak temperature of 160 to 270°C (see Fig. 5(b)). As a resin constituting the first layer 40a, PET and/or PET-based resin or PPS, having a sufficiently high melting peak temperature, is used. Therefore, the first layer 40a does not melt during heat sealing. Thus, metal terminals 30 having superior insulation can be obtained. The resin (PET and/or PET-based resin) constituting the first layer 40a may have a melting peak temperature of 210°C or more. The resin (PET and/or PET-based resin) constituting the second layer 40b may have a melting peak temperature of 200°C or higher. Between the melting peak temperature S_{A} of the first layer 40a and the melting peak temperature S_{B} of the second layer 40b, there is a difference (S_{A} - S_{B}) which is preferably 10°C or more, and more preferably 20 to 100°C. If this temperature difference is 10°C or more, the metal terminals 30 having superior insulation can be obtained.

The first layer 40a preferably has a thickness in the range of 5 to 500 µm, and more preferably 20 to 200 µm. If the first layer 40a has a thickness of 5 µm or more, the insulating property is likely to be secured, and if the thickness thereof is 500 µm or less, cost reduction can be realized. The second layer 40b preferably has a thickness in the range of 5 to 500 µm, and more preferably 20 to 200 µm. If the second layer 40b has a thickness of 5 µm or more, the sealing property is likely to be secured, and if the thickness thereof is 500 µm or less, cost reduction can be realized.

If the terminal resin film 40 has a multi-layer structure including the first layer 40a and the second layer 40b, a third layer 40c may further be included. In this case, the second layer 40b and the third layer 40c are on opposite side surfaces of the first layer 40a (see Fig. 5(c)). The third layer 40c may be formed of a thermosetting resin or a thermoplastic resin having a melting peak temperature of 160 to 270°C.

If the first layer 40a is formed of a thermosetting resin, it is preferable to use, as the second layer 40b, a thermosetting resin having higher fluidity than the thermosetting resin constituting the first layer 40a. Such a configuration allows the second layer 40b to provide good adhesion to the metal terminal 30 during heat sealing. Further, as the third layer 40c, a thermosetting resin having higher fluidity than the thermosetting resin constituting the first layer 40a may be used. According to such a configuration, a power storage device 100 having superior sealing can be obtained.

The third layer 40c preferably has a thickness in the range of 5 to 500 µm, and more preferably 20 to 200 µm. If the third layer 40c has a thickness of 5 µm, the sealing property is likely to be secured, and if the thickness thereof is 500 µm or less, cost reduction can be realized.

An embodiment of the present disclosure has been described in detail so far, but the present invention should not be limited to the embodiment described above. For example, in the above embodiment, although an all-solid-state battery is given as an example of the power storage device to which the packaging material 20 is applied, the packaging material 20 may also be applied to other power storage devices (for example, a lithium ion battery).

### Examples

In the following description, the present disclosure will be described in more detail by way of examples. However, the present invention should not be limited to the following examples.

### <Production of Packaging Material>

### (Example 1)

A highly heat-resistant polyamide film (thickness: 25 µm) having a melting peak temperature of 300°C was prepared as the substrate layer. An aluminum foil (thickness: 40 µm) was prepared as the metal foil layer. A PET film (thickness: 75 µm, single-layer structure) having a melting peak temperature of 255°C was prepared as the inner layer. The substrate layer and the metal foil layer were adhered using a thermosetting adhesive (polyester urethane type), and the metal foil layer and the inner layer were adhered using the same adhesive to obtain the packaging material according to the present example.

### (Example 2)

A packaging material according to the present example was prepared in the same manner as in Example 1 except that a PPS film (thickness: 100 µm) having a melting peak temperature of 290°C was used as the substrate layer instead of the highly heat-resistant polyamide film.

### (Example 3)

A packaging material according to the present example was prepared in the same manner as in Example 1 except that an epoxy thermosetting adhesive was used instead of the polyester urethane thermosetting adhesive.

### (Example 4)

A packaging material according to the present example was prepared in the same manner as in Example 1 except that a polypropylene adhesive (melting peak temperature: 85°C) was used instead of the polyester urethane thermosetting adhesive.

### (Comparative Example 1)

A nylon film (thickness: 25 µm) having a melting peak temperature of 225°C was prepared as the substrate layer. An aluminum foil (thickness: 40 µm) was prepared as the metal foil layer. A polypropylene film (thickness: 75 µm, single-layer structure) having a melting peak temperature of 140°C was prepared as the inner layer. The substrate layer and the metal foil layer were adhered using a polypropylene adhesive (melting peak temperature: 85°C), and the metal foil layer and the inner layer were adhered using the same adhesive to obtain the packaging material according to the present comparative example.

### (Comparative Example 2)

A packaging material according to the present comparative example was prepared in the same manner as in Example 1 except that a PET film (thickness: 25 µm) having a melting peak temperature of 255°C was used as the substrate layer instead of the highly heat-resistant polyamide film.

### <Evaluation of Seal Strength>

In the packaging material produced in each example, two pieces each having a size of 60 mm x 80 mm were cut out, and their short sides were aligned with each other, and then heat-sealed under the conditions of 280°C, a surface pressure of 0.5 MPa, and a duration of 10 seconds. The heat-sealed portion was cut out to have a width of 15mm. Thereby, a measurement sample was obtained. The seal strength of each sample at high temperature was measured under the following conditions.
Measurement device: Universal testing machine manufactured by INSTRON
Measurement temperature: 150°C
Measurement timing: The measurement was started after an elapsed time of 5 and the sample was placed under a temperature condition of 150°C.
Measuring method: The peeling strength (heat seal strength) was measured according to a method specified in JIS K 6854-2:1990 "Adhesives -Determination of peel strength of bonded assemblies- Part 2: 180° peeling" (peeling method: T-shape, peeling speed: 50 mm/min). Evaluation was made based on the following criteria. The results are shown in Tables 1 and 2.
"A": Peeling strength was 10 N/15 mm or more.
"B": Peeling strength was less than 10 N/15 mm.

### <Appearance Evaluation>

The appearance was evaluated by visually observing the heat-sealed part of the sample after the evaluation of the seal strength. Evaluation was carried out based on the following criteria, and the evaluation C was judged as failure. The results are shown in Table 1.
"A": No melting or discoloration was found in the appearance of the substrate layer immediately after the sealing.
"B": No melting was found in the appearance of the substrate layer immediately after the sealing, but discoloration was found.
"C": Melting was found in the appearance of the substrate layer immediately after the sealing.

**[Table 1]**

| | | Example 1 | Example 2 | Example 3 | Example 4 |
|---|---|---|---|---|---|
| Substrate layer | Material | Highly heat-resistant polyamide | PPS | Highly heat-resistant polyamide | Highly heat-resistant polyamide |
| | Melting peak temperature | 300°C | 290°C | 300°C | 300°C |
| Adhesive | Material | Polyurethane adhesive (thermosetting) | Polyurethane adhesive (thermosetting) | Epoxy adhesive (thermosetting) | PP adhesive (thermoplastic) |
| | Melting peak temperature | - | - | - | 85°C |
| Inner layer | Material | PET | PET | PET | PET |
| | Melting peak temperature | 255°C | 255°C | 255°C | 255°C |
| | Configuration | Single layer | Single layer | Single layer | Single layer |
| Evaluation | Sealing strength | A | A | A | B |
| | Appearance | A | A | A | B |

**[Table 2]**

| | | Comparative Example 1 | Comparative Example 2 |
|---|---|---|---|
| Substrate layer | Material | Nylon | PET |
| | Melting peak temperature | 225°C | 255°C |
| Adhesive | Material | PP adhesive (thermoplastic) | Polyurethane adhesive (thermosetting) |
| | Melting peak temperature | 85°C | - |
| Inner layer | Material | PP | PET |
| | Melting peak temperature | 140°C | 255°C |
| | Configuration | Single layer | Single layer |
| Evaluation | Sealing strength | B | A |
| | Appearance | C | C |

### Industrial Applicability

According to the present disclosure, a packaging material which is useful for producing a power storage device excellent in appearance and excellent in heat resistance is provided. Moreover, a power storage device employing the power storage device is provided.

### [Reference Signs List]

- 10...: Power storage device body
- 11...: Substrate layer
- 12a...: First adhesive layer
- 15...: Barrier layer (metal foil layer)
- 12b...: Second adhesive layer
- 18...: Inner layer
- 18a...: First layer
- 18b...: Second layer
- 18c...: Third layer
- 20...: Packaging material
- 30...: Metal terminal (current drawing terminal)
- 40...: Terminal resin film
- 100...: Power storage device

## Claims

1. A packaging material for a power storage device, the packaging material having a laminate structure including:
a substrate layer;
a first adhesive layer;
a metal foil layer;
a second adhesive layer; and
an inner layer containing a polyester-based resin, in this order, wherein,
the inner layer has a melting peak temperature during melting in a range of 160 to 280°C which is measured by a differential scanning calorimeter, and
the substrate layer has a melting peak temperature that is higher than the melting peak temperature of the inner layer.

2. The packaging material according to claim 1, wherein the packaging material is for an all-solid-state battery.

3. The packaging material according to claim 1 or 2, wherein the inner layer has a single-layer structure.

4. The packaging material according to claim 1 or 2, wherein the inner layer has a multi-layer structure including
a first layer containing a polyester-based resin and having a melting peak temperature in a range of 170 to 280°C and
a second layer formed on an inner surface of the first layer and containing a thermosetting resin.

5. The packaging material according to claim 1 or 2, wherein the inner layer has a multi-layer structure including
a first layer containing a polyester-based resin and having a melting peak temperature in a range of 170 to 280°C, and
a second layer formed on an inner surface of the first layer and containing a polyester-based resin, wherein
the second layer has a melting peak temperature in a range of 160 to 270°C, and the melting peak temperature of the second layer is lower than the melting peak temperature of the first layer.

6. The packaging material according to claim 5, wherein between a melting point T_{A} of the first layer and a melting point T_{B} of the second layer, there is a difference T_{A} - T_{B} which is 10°C or more.

7. The packaging material according to any one of claims 4 to 6, further comprising
a third layer formed on a surface of the first layer, wherein the second layer and the third layer are on opposite sides of the first layer, wherein
the third layer contains a polyester-based resin and has a melting peak temperature in a range of 160 to 270°C and which is lower than the melting peak temperature of the first layer.

8. The packaging material according to any one of claims 4 to 6, further comprising
a third layer formed on a surface of the first layer, wherein the second layer and the third layer are on opposite sides of the first layer, wherein
the third layer contains a thermosetting resin.

9. The packaging material according to any one of claims 1 to 8, wherein
the polyester-based resin is at least one of polyethylene terephthalate and polyethylene terephthalate-based resin.

10. The packaging material according to claim 9, wherein
the polyethylene terephthalate-based resin includes a structural unit derived from ethylene glycol, a structural unit derived from terephthalic acid, and an other structural unit, and
a dihydric alcohol component from which the other structural unit is derived is at least one selected from a group consisting of neopentyl glycol, 1,4-butadiol, and diethylene glycol.

11. The packaging material according to claim 9 or 10, wherein
the polyethylene terephthalate-based resin includes a structural unit derived from ethylene glycol, a structural unit derived from terephthalic acid, and an other structural unit, and
an acid component from which the other structural unit is derived is at least one selected from a group consisting of isophthalic acid, adipic acid, and sebacic acid.

12. The packaging material according to any one of claims 1 to 11, wherein
the first adhesive layer and the second adhesive layer are composed of a cured product of a thermosetting adhesive.

13. A power storage device comprising:
a power storage device body;
a current drawing terminal extending from the power storage device body; and
the packaging material according to any one of claims 1 to 12 arranged to clamp the current drawing terminal and house the power storage device body.

14. The power storage device according to claim 13, wherein the power storage device is an all-solid-state battery.
